# EUROPEAN PATENT APPLICATION

(11) **EP 3 168 513 A1**
(43) Date of publication of application: **17.05.2017**
(21) Application number: 16198548.6
(22) Date of filing: 11.11.2016
(51) Int. Cl.: F16K 7/17, A47J 31/46

(54) **VALVE UNIT FOR A HOT BEVERAGE DISPENSING MACHINE**

(30) Priority: 12.11.2015 IT UB20155544
(71) Applicant: Pres-Block S.P.A., 10040 Caselette (IT)
(72) Inventor: NICOLINO, Aldo, 10040 CASELETTE (IT)
(74) Representative: D'Angelo, Fabio

(57) **Abstract**

The invention relates to a valve unit (10, 10', 10") for a coffee dispensing machine (1, 1', 1"), comprising a selection valve (20) having a first inlet mouth (24) connected in use to the delivery area (4) for receiving from this latter any residual water and/or steam; a second inlet mouth (23) connected in use to a water delivery line (6) running to the delivery area (4); an outlet mouth (25); a plug (21) to enable or prevent a fluidic communication between the first inlet mouth (24) and the outlet mouth (25); and a hollow body (26), internally defining a cavity (27) communicating with said mouths (24, 23, 25). The plug (21) comprises a flexible diaphragm (28) dividing the cavity (27) into a first space (30), connected to the first inlet mouth (24) and to the outlet mouth (25), and into a second space (29), fluid-tightly separated from the first space (30) and connected to the second inlet mouth (23); the diaphragm (28) being movable inside the cavity (27) to close or open the first inlet mouth (24) thanks to the sole effect of the pressure difference between the inlet mouths (24, 23).

## Description

The present invention relates to a valve unit for a hot beverage dispensing machine, in particular to a coffee dispensing machine, such as e.g. a high-pressure machine, intended for a domestic use, to which the following description will make explicit reference without thereby losing its generality.

As already known, machines of the above type are widely spread on the market. In these machines, the coffee powder, loose or contained in a pod, is inserted in a suitable housing arranged at a delivery area of the machine; then, the flow of hot pressurized water through said housing determines the instantaneous preparation and delivery of the coffee.

These machines are equipped with a fluidic circuit, essentially comprising a water-collecting tank, a water-heating boiler connected to the delivery area and a pump connecting the tank to the boiler.

More precisely, the pump has an inlet section, connected to the tank by means of a suction duct, and an outlet section, connected to the boiler and to the delivery area through a delivery line.

When the user wishes to make some coffee, he must operate both the boiler and the pump so that the hot pressurized water passes through the pod arranged in the relative delivery area.

Once the pump is off, the part of the circuit between the pump and the hot water delivery area can suffer from a stagnation of pressurized water, with a consequent possible undesired dripping from the delivery area.

Moreover, the aforesaid pressure stagnation may generate undesirable steam puffs when opening the delivery area for the removal of the used pod and the insertion of the next one.

The proposed solution to the above drawbacks is a drainage line, exiting the delivery area, controlled by a solenoid valve whose opening/closing is based on the activation/deactivation of the pump. The used solenoid valve is a two-position valve, is normally open and is closed based on the activation of the pump.

In this way, when the pump is deactivated, the solenoid valve is automatically arranged in the open position, thus consequently draining any residual water and/or steam from the delivery area.

The aforesaid solution, although functionally valid and therefore universally used, suffers from some drawbacks.

In particular, the solenoid valve arranged on the drainage line may be subject in time to failures and/or malfunctions due to the fact of being continuously traversed by "dirty" water, i.e. carrying coffee debris in the solution.

Moreover, it is particularly felt in the field the need to reduce as much as possible the costs of coffee machines and, more particularly, of the fluidic circuits of such machines.

The object of the present invention is to provide a valve unit for a hot beverage dispensing machine, in particular a coffee dispensing machine, which simply and inexpensively overcomes the drawbacks of the aforesaid known coffee machines.

The above object is achieved by the present invention, thanks to a valve unit for a hot beverage dispensing machine, in particular a coffee dispensing machine, as defined in claim 1.

For a better understanding of the present invention, three preferred embodiments will be described in the following, purely by way of non-limiting examples and with reference to the accompanying drawings, in which:
- Figure 1 is a schematic side view of a hot beverage dispensing machine including a valve unit according to the teaching of the present invention;
- Figure 2 shows, on an enlarged scale and in section, the valve unit of Figure 1;
- Figure 3 is a schematic side view similar to Figure 1 and showing a possible embodiment of a hot beverage dispensing machine provided with a different embodiment of a valve unit according to the teaching of the present invention;

- Figure 4 shows, on an enlarged scale and in section, a portion of the valve unit of Figure 3;
- Figure 5 is a schematic side view, in partial section, similar to Figures 1 and 3 and showing another possible embodiment of a hot beverage dispensing machine provided with a further different embodiment of a valve unit according to the teaching of the present invention; and
- Figure 6 shows a detail of Figure 5 on an enlarged scale. With reference to Figure 1, number 1 indicates as a whole a hot beverage dispensing machine, in particular a coffee dispensing machine.

In the non-limiting example shown, the machine 1 is of the high-pressure type and is intended for a domestic use. More specifically, the machine 1 allows the mixing of the coffee powder with hot pressurized water. In particular, the coffee, loose or contained in a pod 2, known per se and only schematically shown, can be inserted in a suitable housing 3 arranged at a delivery area 4 of the machine 1; the flow of hot pressurized water through the housing 3 determines the instantaneous preparation and delivery of the coffee from the delivery area 4.

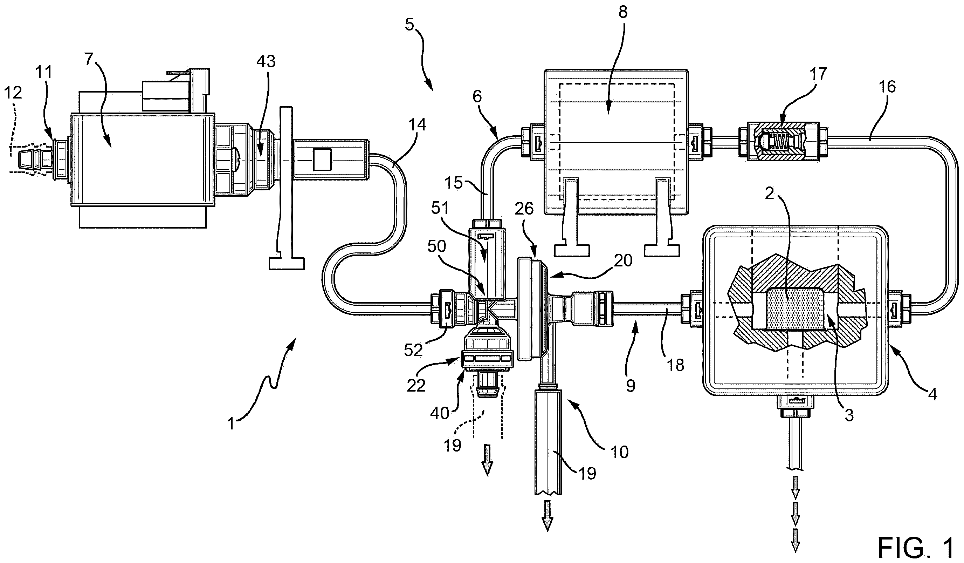

As shown in Figure 1, the machine 1 is equipped with a fluidic circuit 5 supplied by a water-collecting tank (known and not shown) essentially comprising:
- a delivery line 6 of clean water, connecting the tank with the delivery area 4;
- a pump 7 arranged along the delivery line 6 downstream of the tank;
- a boiler 8, also arranged along the delivery line 6 between the pump 7 and the delivery area 4;
- a drainage line 9 of the residual water and/or steam from the delivery area 4; and
- a valve unit 10, arranged along the drainage line 9 and also interfacing the delivery line 6 between the pump 7 and the boiler 8.

In particular, the pump 7, known and only schematically shown, has an inlet section 11, connected to the tank by means of a suction duct 12 (only partially shown with a dashed line in Figure 1), and an outlet section 13, connected to the boiler 8 and to the delivery area 4 by means of the delivery line 6.

In particular, in the example shown in Figure 1, the delivery line 6 comprises:
- a first duct 14 connecting the outlet section 13 of the pump 7 with the valve unit 10;
- a second duct 15 connecting the valve unit 10 with the boiler 8; and
- a third duct 16, on which a non-return valve 17, connecting the boiler 8 with the delivery area 4, is arranged in a known way.

Analogously, the drainage line 9 comprises:
- a duct 18 connecting the delivery area 4 with the valve unit 10; and
- one or more outlet ducts 19, two in the shown example, connecting the valve unit 10 to an outlet (known and not shown).

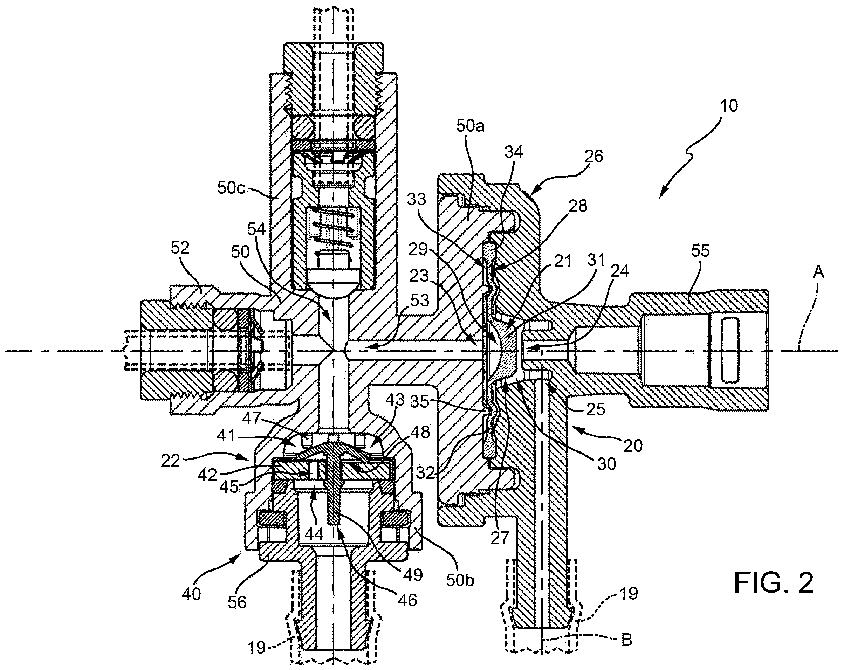

The valve unit 10, shown in detail in Figure 2, allows the control of the drainage water (which is dirty because it contacts the housing 3 of the pod 2) and/or of the steam remaining in the delivery area 4 at the end of each delivery.

Advantageously, the valve unit 10 is controlled by the fluidic pressures on the delivery line 6, and therefore interfaces that line.

In particular, the valve unit 10 is connected to the pump 7 and the boiler 8 through the ducts 14 and 15 and essentially comprises:
- a selection valve 20, having a plug 21 usable in an open configuration and in a closed configuration, wherein it respectively enables or prevents a fluidic communication between the delivery area 4 and the duct 18 and a respective outlet duct 19; and
- a trigger valve 22 for opening the selection valve 20.

In more detail, the selection valve 20 has an inlet mouth 23 connected to the ducts 14 and 15 of the delivery line 6, a further inlet mouth 24 connected to the delivery area 4 through the duct 18 to receive from the delivery area 4 the residual water and/or steam at the end of each delivery, and an outlet mouth 25 for draining the residual water and/or steam in the respective outlet duct 19.

In its open configuration, the plug 21 allows the fluidic connection between the inlet mouth 24 and the outlet mouth 25; otherwise, in its closed configuration, the plug 21 prevents the connection between the inlet mouth 24 and the outlet mouth 25.

The selection valve 20 comprises a hollow body 26, internally defining a cavity 27 communicating with both inlet mouths 23, 24 and with the outlet mouth 25.

The plug 21 comprises a flexible diaphragm 28, housed in the cavity 27 so as to divide the cavity 27 into two separate spaces 29, 30, one (29) of them being connected to the inlet mouth 23 and the other one (30) being fluid-tightly separated from the space 29 and connected to the inlet mouth 24 and to the outlet mouth 25.

Advantageously, the diaphragm 28 comprises a plugging portion 31 movable inside the cavity 27 between the open and the closed configurations thanks to the sole effect of the pressure difference between the inlet mouth 23 and the inlet mouth 24.

As shown in Figure 2, the inlet mouths 23, 24 extend along the same axis A, while the outlet mouth 25 extends along a further axis B, orthogonal to the axis A; the diaphragm 28 is transverse to the axis A and cooperates, by means of the plugging portion 31, with the inlet mouth 24 in the closed configuration.

The diaphragm 28 is substantially disc-shaped with an axis A and extends in a position facing both inlet mouths 23, 24 and interposed between them along the axis A.

The diaphragm 28 comprises a peripheral portion 32 fluid-tightly gripped in an associated interstice 33 of the annular cavity 27 and a central portion defining the plugging portion 31 and surrounded by the peripheral portion 32.

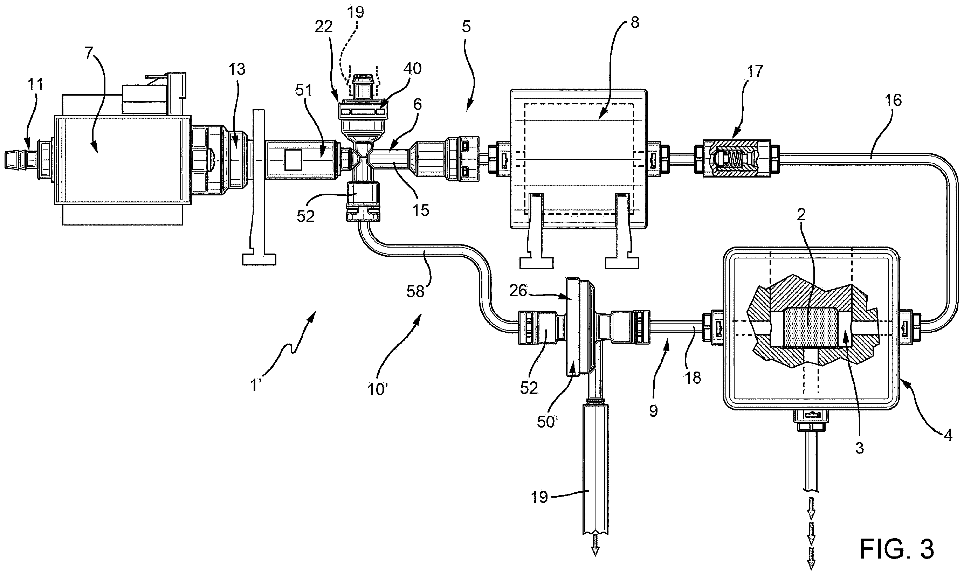

In more detail, the peripheral portion 32 of the diaphragm 28 comprises an annular perimeter lip 34 thicker than the remaining part of the peripheral portion 32 and an undulation 35 arranged in a more radially inward position with respect to the perimeter lip 34. As shown in Figure 3, the perimeter lip 34 is fluid-tightly housed in an annular groove whose shape is complementary to the interstice 33; analogously, the undulation 35 is fluid-tightly housed in an annular seat whose shape is complementary to the interstice 33.

In the shown example, the plugging portion 31 is dome-shaped, its convexity facing the space 30 and the inlet mouth 24.

The trigger valve 22 comprises a hollow body 40, internally defining a cavity 41, and a disc-shaped base element 42 fluid-tightly housed in the cavity 41 and dividing this latter into two separate spaces 43, 44, one (43) of them being connected to the space 29 and the other (44) being connected to a respective outlet duct 19. The base element 42 has an opening section 45 to allow the fluidic communication between the spaces 43 and 44.

The trigger valve 22 further comprises a flexible plug 46 provided, on the side of the space 43, with a diaphragm portion 47 elastically cooperating with the opening section 45 under the thrust of a fluidic pressure to fluid-tightly separate the spaces 43 and 44.

The base element 42 has at least one recess 48 arranged on the side of the space 43 and communicating with the opening section 45 to allow a fluid leakage through the base element 42 when the pressure in the space 43 exceeds the pressure in the space 44 by an amount less than or equal to a threshold value P₀ based on the geometry of the recess 48.

The plug 46 further comprises a shaft 49 coaxially mounted through the base element 42, the diaphragm portion 47 radially protruding from one of its ends.

Preferably, the diaphragm portion 47 of the plug 46 has the shape of a circular dome and is convex toward the space 43. In the example shown in Figures 1 and 2, a part of the body 26 of the selection valve 20 and a part of the body 40 of the trigger valve 22 are integral portions 50a, 50b of a single support member 50 of the valve unit 10.

The support member 50 also defines integrally with its portion 50c a part of the body of a non-return valve 51 connected to the duct 15 and a connecting joint 52 to the duct 14.

The support member 50 further defines internally a duct 53, connecting the space 29 and the duct 14 and extending along the axis A, and a duct 54 connecting the space 43 of the trigger valve 22 with the non-return valve 51 and with the duct 15; the duct 54 extends transversally, in particular perpendicularly, to the duct 53 and intersects this latter so as to connect all the ducts 14, 15 and the spaces 29, 43. As shown in Figure 2, the duct 54 extends parallel to the axis B.

Each body 26, 40 is made by coupling the respective finishing elements 55, 56 to the integral portions 50a, 50b of the support member 50.

In use, the ignition of the machine 1 determines the activation of the boiler 8. After having arranged a pod 2 in the specific housing 3, the coffee preparation simply occurs by activating the pump 7 by means of a suitable pushbutton (known and not shown).

Following said activation, a pressure P₁ higher than the atmospheric pressure is established in the entire delivery line 6. The clean water in the tank and in the fluidic circuit 5 is therefore pumped toward the delivery area 4. In particular, the water flows through the duct 14, passes through the joint 52, then reaching the duct 15 through the ducts 53 and 54 and the non-return valve 51 and entering the boiler 8.

The pressure in the ducts 53 and 54 and then in the spaces 29 and 43 is significantly higher than the one in the outlet ducts 19, in the duct 18 and at the inlet mouth 24. The diaphragm 28 of the plug 21 is therefore pushed by the pressure difference between the inlet mouths 23 and 24 in the closed configuration, in which it fluid-tightly cooperates, through its plugging portion 31, with the inlet mouth 24 so as to close the connection between this latter and the outlet mouth 25.

The pressure difference between the space 43 and the space 44 is greater than the threshold value P₀ and therefore the diaphragm portion 47 of the plug 46 adheres to the adjacent head surface of the base element 42 also at the recess 48, thus fluid-tightly separating the spaces 43 and 44.

At the end of the delivery of the coffee, the pump 7 is deactivated; therefore, the pressure in the delivery line 6 decreases, thus going below the previous value P₁.

When the difference between the pressure in the space 43 and the pressure in the space 44 becomes less than or equal to the threshold value P₀, the diaphragm portion 47 is detached from the head surface of the base element 42 at the recess 48, thus allowing a fluid leakage from the space 43 to the space 44.

It is therefore also obtained a pressure reduction in the space 29 until reaching a value lower than the pressure in the space 30 connected to the delivery area 4. At this point, the diaphragm 28 of the plug 21 is arranged in the open configuration (Figure 2), where it has its shutting portion 31 detached from the inlet mouth 23 so as to allow the connection of this latter with the outlet mouth 25.

The residual water and steam that are still present in the delivery area 4, as well as the residual pressure, are quickly discharged in the outlet ducts 19 so as to avoid possible steam puffs by opening the delivery area 4 to remove the old pod 2 and insert a new one.

Figure 3 indicates in its entirety by 1' a possible variant of the coffee machine shown in Figure 1; the machine 1' will be described below only insofar as it differs from the machine of Figure 1, indicating with the same reference numbers any parts identical or equivalent to those already described.

In particular, the machine 1' differs from the machine 1 essentially in that it comprises a different embodiment of the valve unit, which is the object of the present invention and is indicated by 10' in its entirety.

More precisely, in this case, the valve unit 10' comprises a support member 50' defining only the body 26 of the selection valve 20; the trigger valve 22 and the non-return valve 51 are arranged in a position that is distinct and separate from the selection valve 20. In more detail, as shown in Figure 3, the trigger valve 22 and the non-return valve 51 are directly arranged on the portion of the delivery line 6 connecting the pump 7 to the boiler 8, while the selection valve 20 is connected, on the one side, to the delivery area 4 through the duct 9 and, on the opposite side, to the delivery line 6, at the area where the trigger valve 22 and the non-return valve 51 are arranged. This last connection between the selection valve 20 and the delivery line 6 occurs by means of a further duct 58.

The structure and the operation of the selection and trigger valves 20, 22 and, more in general, the operation of the entire coffee machine 1' are identical to those previously seen with regard to the embodiment of Figures 1 and 2.

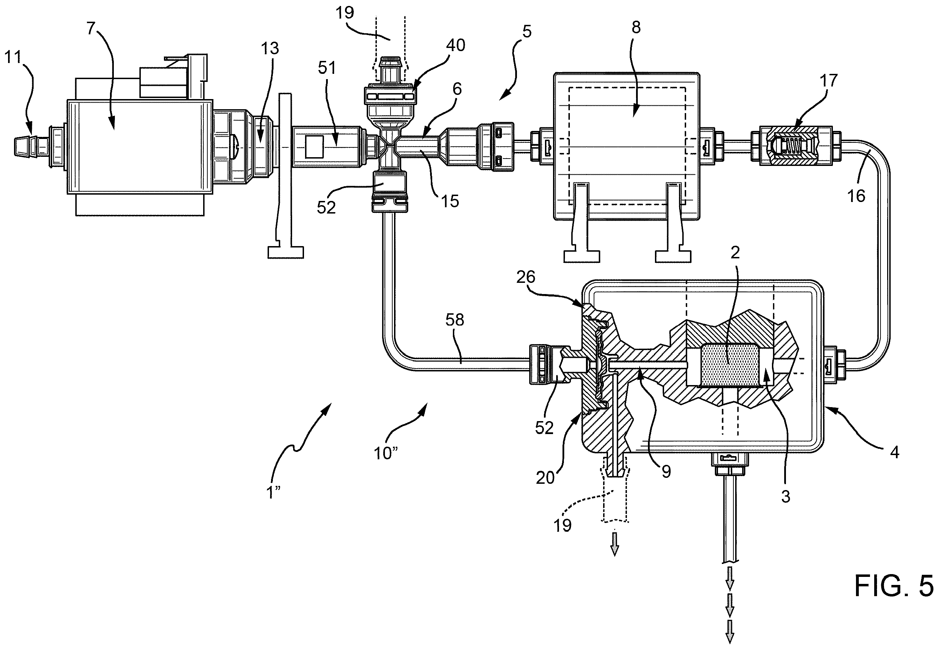

Figure 5 indicates in its entirety by 1" a further possible variant of the coffee machines 1, 1'; the machine 1" will be described below only insofar as it differs from the machine 1', indicating with the same reference numbers any parts identical or equivalent to those already described.

In particular, the machine 1" differs from the machine 1 essentially in that it comprises a different embodiment of the valve unit, object of the present invention and indicated by 10" in its entirety.

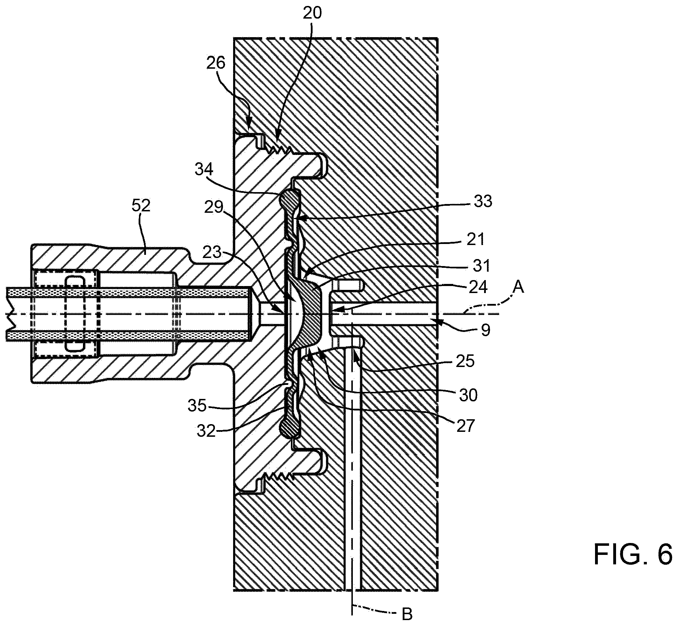

In particular, in this case, the selection valve 20 is directly integrated in the delivery area 4. More precisely, in the example shown in Figures 5 and 6, a part of the body 26 of the selection valve 20 is directly integral with the body defining the delivery area 4.

The trigger valve 22 and the non-return valve 51 are arranged as shown with reference to the valve unit 10'. Also in this case, the structure and the operation of the selection and trigger valves 20, 22, and more in general the operation of the entire coffee machine 1", are identical to those previously seen with regard to the embodiment of Figures 1 and 2.

By considering the characteristics of the valve units 10, 10', 10" according to the present invention, the advantages it allows to obtain are clear.

In particular, the use of a selection valve 20 whose opening and closing is fully and exclusively controlled by the pressure difference between the inlet mouths 23 and 24 allows avoiding the use of expensive solenoid valves to control the drainage of the residual water and/or steam from the delivery area 4, thus avoiding the generation of undesirable steam puffs when opening the delivery area 4 for the removal of the used pod 2 and the insertion of the next one.

The selection valve 20 also allows an effective reduction of the dripping time from the delivery area 4 after the preparation of each coffee.

Moreover, thanks to its simple configuration and to the fact that it does not require any electrical control circuits, the selection valve 20 can be traversed by water with coffee residues with no risk of failures or malfunctions.

The trigger valve 22, also having a simple design and structure, allows an effective and rapid control of the opening of the selection valve 20 during the operation of the machine 1, 1', 1".

The solution of Figures 1 and 2 allows the integration in a single support member 50 of the selection and trigger valves 20, 22 and of the non-return valve 51, with a consequent considerable reduction of the assembly times of the valve unit 10 and of the complexity of the fluidic circuit 5.

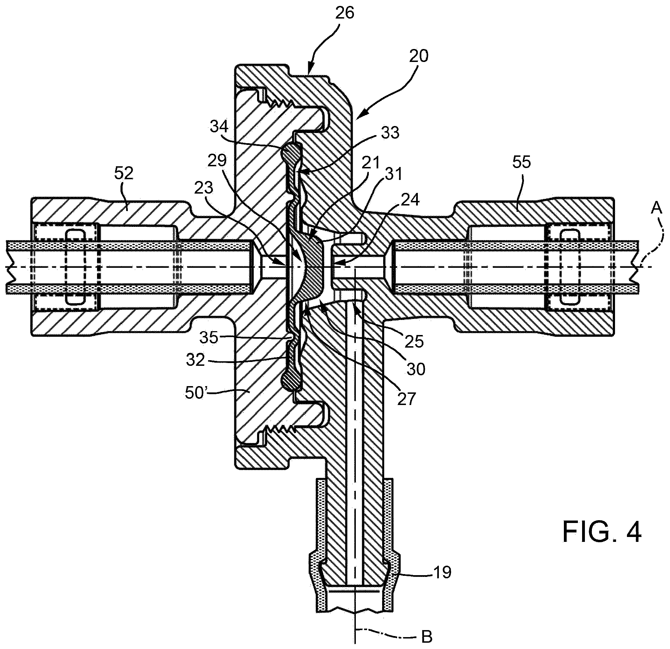

The solution of Figures 3 and 4 allows a high positioning flexibility of the main components of the valve unit 10'.

Finally, the solution of Figures 5 and 6 allows arranging the selection valve 20 directly in the delivery area 4, with savings in terms of overall dimensions and assembly times.

It is clear that the valve units 10, 10', 10" described and shown herein can be subject to modifications and variations without departing from the scope of protection defined by the appended claims.

## Claims

1. A valve unit (10, 10', 10") for controlling the drainage of residual water and/or steam from a delivery area (4) of a hot beverage dispensing machine (1, 1', 1"), in particular a coffee dispensing machine, said valve unit (10, 10', 10") comprising a selection valve (20) having:
- a first inlet mouth (24) designed to be connected, in use, to said delivery area (4) to receive any residual water and/or steam from the delivery area at the end of each delivery;
- an outlet mouth (25) for discharging the residual water and/or steam; and
- a plug (21) usable in an open configuration and in a closed configuration, wherein it respectively enables or prevents a fluidic communication between said first inlet mouth (24) and said outlet mouth (25);
**characterized in that** said selection valve (20) further comprises a second inlet mouth (23) to be connected, in use, to a delivery line (6) of clean water running to said delivery area (4), and a hollow body (26) housing a cavity (27) communicating with said first and second inlet mouths (24, 23) and with said outlet mouth (25); **in that** said plug (21) comprises a flexible diaphragm (28) housed in said cavity (27) so as to divide the cavity (27) into a first space (30), connected to said first inlet mouth (24) and to said outlet mouth (25), and into a second space (29), fluid-tightly separated from said first space (30) and connected to said second inlet mouth (23); and **in that** said diaphragm (28) comprises at least one plugging portion (31) movable inside said cavity (27) between said open and closed configurations under the sole effect of the pressure difference between said first inlet mouth (24) and said second inlet mouth (23).

2. A valve unit according to claim 1, wherein said plugging portion (31) of said diaphragm (28) cooperates, in said closed configuration, with either said first inlet mouth (24) or said outlet mouth (25).

3. A valve unit according to claim 1 or 2, wherein said diaphragm (28) comprises a peripheral portion (32) fluid-tightly gripped in an associated interstice (33) of said cavity (27), and wherein said peripheral portion (32) surrounds said plugging portion (31).

4. A valve unit according to any one of the preceding claims, wherein said first and second inlet mouths (24, 23) extend along a same axis (A), wherein said outlet mouth (25) extends along a further axis (B) transversal to the axis (A) of said first and second inlet mouths (24, 23), and wherein said diaphragm (28) is transversal to the axis (A) of said first and second inlet mouths (24, 23) and cooperates, through said plugging portion (31), with said first inlet mouth (24).

5. A valve unit according to claim 4, wherein said peripheral portion (32) of said diaphragm (28) comprises an annular perimeter lip (34) thicker than the remaining part of the peripheral portion (32) and at least one undulation (35) arranged in a more radially inward position with respect to said perimeter lip (34); wherein said perimeter lip (34) is fluid-tightly housed in an annular groove whose shape is complementary to said interstice (33); and wherein said undulation (35) is fluid-tightly housed in an annular seat complementary to said interstice (33).

6. A valve unit according to claim 4 or 5, wherein said plugging portion (31) is dome-shaped, its convexity facing said first space (30).

7. A valve unit according to any one of the preceding claims, further comprising a trigger valve (22) for opening said selection valve (20), said trigger valve (22) comprising:
- a further hollow body (40) internally defining a further cavity (41);
- a disc-shaped base member (42) fluid-tightly housed in said further cavity (41), dividing this cavity (41) into a third space (43), connected to said second space (29), and into a fourth space (44) designed to be connected to a drainage tube (19) for any residual water and/or steam;
- an opening section (45) formed in said base member (42) to allow the fluidic communication between said third and fourth spaces (43, 44);
- a flexible plug (46) provided, on the side of said third space (43), with a diaphragm portion (47) elastically cooperating with said opening section (45) under the thrust of a fluidic pressure to fluid-tightly separate said third and fourth spaces (43, 44);
- at least one recess (48) formed in said base member (42) on the side of said third space (43) and communicating with said opening section (45) to allow a fluid leakage through the base member (42) if the pressure in said third space (43) exceeds the pressure in said fourth space (44) by an amount less than or equal to a threshold value (P₀) based on the geometry of said recess (48).

8. A valve unit according to claim 7, wherein said plug (46) of said trigger valve (22) comprises a shaft (49) coaxially mounted through said base member (42); and wherein said diaphragm portion (47) of said plug (46) of said trigger valve (22) radially protrudes from one end of said shaft (49).

9. A valve unit according to claim 7 or 8, wherein said diaphragm portion (47) of said plug (46) of said trigger valve (22) has a circular dome-like shape and is convex toward said third space (43).

10. A valve unit according to any one of claims 7 to 9, wherein at least a part of said hollow body (26) of said selection valve (20), at least a part of said further hollow body (40) of said trigger valve (22) and, preferably, at least a part of a non-return valve (51) arranged on said delivery line (6) are integral portions (50a, 50b, 50c) of a single support member (50) of the valve unit (10).

11. A valve unit according to any one of claims 1 to 9, wherein at least a part of said hollow body (26) of said selection valve (20) is integrated in said delivery area (4) of said machine (1").
